**Europäisches Patentamt**

**European Patent Office**

**Office européen des brevets**

(19)

(11) Numéro de publication: **0 296 926 B1**

## (12) FASCICULE DE BREVET EUROPEEN

(45) Date de publication de fascicule du brevet: **14.10.92**

(51) Int. Cl.5: **C08K 3/36**, C08F 2/44, C08L 33/00

(21) Numéro de dépôt: **88401424.2**

(22) Date de dépôt: **10.06.88**

Le dossier contient des informations techniques présentées postérieurement au dépôt de la demande et ne figurant pas dans le présent fascicule.

(54) **Polymères composites, leur préparation et leur utilisation en chromatographie liquide.**

(30) Priorité: **11.06.87 FR 8708125**

(43) Date de publication de la demande:
**28.12.88 Bulletin 88/52**

(45) Mention de la délivrance du brevet:
**14.10.92 Bulletin 92/42**

(84) Etats contractants désignés:
**AT BE CH DE ES FR GB GR IT LI LU NL SE**

(56) Documents cités:
**EP-A- 0 011 190**
**LU-A- 58 635**
**US-A- 2 467 341**
**US-A- 3 557 562**

**CHEMICAL ABSTRACTS, vol. 99, no. 8, 22 août 1983, page 621, résumé no. 63538w, Columbus, Ohio, US; & PL-A-116 436 (SLASKA AKADEMIA MEDYCZNA) 30-09-1982**

(73) Titulaire: **I.B.F.**
**35 Avenue Jean-Jaurès**
**F-92390 Villeneuve-La-Garenne(FR)**

(72) Inventeur: **Boschetti, Egisto**
**5 Rue du Docteur Rochefort**
**F-78400 Chatou(FR)**
Inventeur: **Girot, Pierre**
**7 Rue du Terrage**
**F-75010 Paris(FR)**

(74) Mandataire: **Savina, Jacques et al**
**RHONE-POULENC SANTE, Service Brevets,**
**20 Avenue Raymond Aron**
**F-92165 Antony Cédex(FR)**

## Description

La présente invention concerne de nouveaux polymères composites homogènes à base de silice et de copolymères réticulés tridimensionnels utiles dans les techniques de chromatographie liquide notamment pour la séparation de composés biologiques.

Afin de pouvoir être utilisés industriellement, les supports de chromatographie liquide doivent posséder de nombreuses propriétés physico-chimiques. En particulier, ils doivent être hydrophiles, chimiquement inertes, stables aux agents chimiques et physiques courants, mécaniquement rigides, non biodégradables, modifiables chimiquement pour le greffage de molécules, de porosité connue et maîtrisée au moment de la synthèse, obtenables sous forme de billes avec une faible dispersion de diamètre et peu coûteux.

A l'heure actuelle, aucun support connu ne répond parfaitement à tous ces impératifs.

Il a maintenant été trouvé, conformément à l'invention, de nouveaux polymères composites dont les propriétés physico-chimiques répondent parfaitement aux exigences industrielles.

Les polymères composites selon l'invention sont des polymères homogènes contenant sous forme interpénétrée 20 % à 80 % en poids de silice et 80 % à 20 % en poids d'un copolymère acrylique, vinylique et/ou allylique réticulé tridimensionnel comprenant sous forme copolymérisée 70 % à 98 % en poids d'au moins un monomère acrylique, vinylique ou allylique monofonctionnel et 2 % à 30 % en poids d'un monomère réticulant acrylique ou allylique bifonctionnel.

Les polymères composites préférés sont ceux contenant 20 % à 50 % en poids de silice et 50 % à 80 % en poids du copolymère acrylique, vinylique et/ou allylique réticulé tridimensionnel.

Comme monomères acryliques monofonctionnels, on peut citer l'acrylamide, le méthacrylamide, le N-[tris(hydroxyméthyl)méthyl] acrylamide, le N-[tris(hydroxyméthyl)méthyl]méthacrylamide, le méthylolacrylamide, l'acrylate de polyéthylèneglycol, le N-acryloyl ou N-méthacryloyl amino-2 hydroxyméthyl-2 propanediol-1,3, le morpholinoéthylacrylamide, le diéthylaminoéthylacrylamide, le diéthylaminoéthylméthacrylamide, le triéthylaminoéthylacrylamide, le triméthylaminopropylméthacrylamide, l'acide acrylique, l'acide méthacrylique, l'acide acrylamido-6 hexanoïque, l'acryloylglycine, l'acryloyl $\beta$-alanine, l'acide acrylamidométhylpropanesulfonique, l'acryloylphosphocholamine et l'acroléine.

Comme monomères vinyliques et allyliques monofonctionnels, on peut citer la vinylpyrrolidone et l'allylamine.

Comme monomères réticulants acryliques et allyliques bifonctionnels, on peut citer le N,N′-diallyltartradiamide, le N,N′-méthylène-bis-acrylamide, le N,N′-hexaméthylène-bis-acrylamide, le N,N′-méthylène-bis-hydroxyméthylacrylamide, le glyoxal-bis-acrylamide, l'éthylènediacrylate et le diacrylate de polyéthylèneglycol.

Les monomères acryliques et vinyliques préférés sont le N-[tris(hydroxyméthyl)méthyl]acrylamide, le N-[tris(hydroxyméthyl)méthyl]méthacrylamide, le diéthylaminoéthylacrylamide et la vinylpyrrolidone. Le monomère réticulant préféré est le N,N′-méthylène-bis-acrylamide.

Les polymères composites selon l'invention peuvent être préparés par polymérisation simultanée ou séquentielle, en milieu aqueux, de silicate de sodium, d'un ou plusieurs monomères vinyliques, acryliques ou allyliques monofonctionnels et d'un monomère réticulant acrylique ou allylique bifonctionnel en présence d'un agent de polymérisation.

Le procédé consiste à ajouter une solution aqueuse de silicate de sodium dans une solution aqueuse à pH 4-5 du ou des monomères vinyliques, acryliques ou allyliques et du monomère réticulant. A ce milieu qui est stable 2 à 3 heures à température ambiante, est ajouté l'agent de polymérisation. La polymérisation est poursuivie à une température variant de 10°C à 80°C et de préférence de 20°C à 50°C.

La solution du ou des monomères vinyliques, acryliques ou allyliques est acidifiée à pH 4-5 au moyen d'un acide organique ou minéral tels que l'acide acétique ou l'acide sulfurique.

La concentration en silicate de sodium de la solution aqueuse soumise à la polymérisation varie de 20 g/l à 200 g/l et de préférence de 30 g/l à 150 g/l.

La concentration en monomères acryliques, vinyliques et/ou allyliques de la solution aqueuse soumise à la polymérisation varie de 20 g/l à 250 g/l et de préférence de 80 g/l à 160 g/l.

Le rapport en poids du ou des monomères acryliques, vinyliques ou allyliques / monomère réticulant est compris entre 50 et 3 et de préférence entre 20 et 5.

La concentration des agents de polymérisation dans la solution aqueuse soumise à la polymérisation varie de 1 g/l à 200 g/l.

L'agent de polymérisation est un agent habituellement utilisé en polymérisation radicalaire. Comme tels, on peut citer les systèmes Red-ox comme persulfate alcalin + N,N,N′,N′-tétraméthyléthylènediamine, persulfate alcalin + diméthylaminopropioni-nitrile et l'azo-2,2′-bis-isobutyronitrile.

La polymérisation peut être une polymérisation en bloc ou en émulsion. Dans le cas de la polymérisation en bloc, la solution aqueuse contenant le silicate de sodium, les divers monomères et l'agent de polymérisation est soumise à une polymérisation en phase homogène. Le bloc de gel aqueux obtenu est ensuite fractionné en grains par des moyens physiques classiques, lavé avec de l'eau et/ou des solvants organiques puis séché jusqu'à obtention d'une poudre.

La polymérisation en émulsion, qui est le mode de préparation préféré car elle fournit directement le polymère sous forme de granulés sphériques de taille déterminée, peut être effectuée en émulsionnant la solution aqueuse de silicate de sodium et des monomères avant polymérisation, dans un liquide organique non miscible et sous agitation et contenant éventuellement un agent émulsifiant. La vitesse d'agitation est réglée de manière à obtenir une émulsion de la phase aqueuse dans la phase organique ayant la taille de gouttelettes voulue. Une fois réglée la vitesse d'agitation, on introduit dans l'émulsion l'agent de polymérisation qui déclenche la polymérisation. Les particules sphériques de polymère sont récupérées par décantation, neutralisées, filtrées puis lavées à l'eau.

A la solution aqueuse soumise à la polymérisation, on peut éventuellement ajouter un produit qui permet d'augmenter la viscosité du milieu réactionnel tel que le glycérol.

Comme liquide organique non miscible utilisable, on peut citer, par exemple, les huiles végétales (huile de soja, huile d'arachide, huile de tournesol, etc ...) ou minérales (huile de paraffine, huile de silicones, etc...), les produits de distillation fractionnée du pétrole (benzène, toluène, etc...), les hydrocarbures chlorés (tétrachlorure de carbone, chlorure de méthylène, etc...) et les mélanges de ces divers composés.

La phase organique peut éventuellement contenir un agent émulsifiant comme les produits connus sous la dénomination commerciale "Arlacel C", "Spans" ou "Tweens" à la concentration de 0,05 % à 5 % en volume.

Les perles obtenues par le procédé de polymérisation en émulsion ont un diamètre de particules qui varie, suivant les conditions opératoires, de 5 $\mu$m à 500 $\mu$m.

Il est aussi possible d'obtenir des polymères de forme différente tels que des filtres, des plaques ou des films à condition de préformer ou mouler la solution avant polymérisation.

Les polymères selon l'invention sont stables thermiquement et sont insensibles à l'attaque bactérienne ou enzymatique. En outre, ils sont stables chimiquement en présences d'agents chaotropiques, de détergents et de dissociants et peuvent être utilisés dans une vaste zone de pH.

Les polymères selon l'invention peuvent être utilisés dans les techniques de chromatographie liquide notamment pour la séparation de composés biologiques tels que les sucres, les acides aminés, les nucléotides, les polysaccharides, les protéines, les acides nucléiques et pour la séparation de molécules organiques de différentes tailles y compris les polymères.

Ils permettent la séparation de ces composés soit par tamisage moléculaire (monomères ioniques) soit par échanges ioniques (monomères ionisables) soit par spécificité (monomères fonctionnalisés spécifiques).

Les exemples suivants, donnés à titre non limitatif, montrent comment l'invention peut être mise en pratique.

## EXEMPLE 1

A 200 ml d'une solution comprenant 150 mg/ml de N-[tris(hydroxyméthyl)méthyl]acrylamide et 30 mg/ml de méthylène-bis-acrylamide dans de l'eau déminéralisée, on ajoute 50 ml d'acide acétique glacial puis 5 g de persulfate d'ammonium. A la solution ainsi obtenue, on ajoute 200 ml d'une solution aqueuse de silicate de sodium à 8,8 % soit 10°Bé. Cette nouvelle solution est stable 2 à 3 heures à température ambiante.

40 ml de N,N,N$'$,N$'$-tétraméthyléthylènediamine (TEMED) sont introduits dans la solution organominérale, sous légère agitation. Après quelques secondes, on observe un échauffement du milieu réactionnel et une prise en masse rapide. On obtient ainsi un bloc de gel aqueux, rigide, de couleur blanc ivoire qui peut être desséché à l'air libre ou à l'étuve à une température comprise entre l'ambiante et 120°C.

Ce bloc peut être fragmenté en grains par les procédés classiques.

## EXEMPLE 2

La solution organo-minérale préparée selon le procédé décrit à l'exemple 1 est dispersée dans 2 litres d'huile de paraffine modérément agitée et à laquelle on a préalablement ajouté 1 ml d'agent émulsifiant connu sous la dénomination commerciale d'"Arlacel C".

La vitesse d'agitation est réglée de façon à obtenir une émulsion stable dont les gouttelettes ont un diamètre compris entre 5 $\mu$m et 500 $\mu$m.

A cette émulsion, on ajoute un mélange composé de 50 ml de TEMED, 5 ml d'"Arlacel C" et 150 ml d'huile de paraffine.

Après quelques secondes, on observe un élévation de température d'une dizaine de degrés celsius. Après retour à la température ambiante, on décante, la phase huileuse est éliminée par succion et les perles obtenues sont lavées à l'eau déminéralisée. La suspension de perles est ajustée à pH 6,5-7 par adjonction de soude normale, puis laissée sous faible agitation pendant une nuit.

Les perles sont tamisées puis desséchées.

Ces perles sont utilisables dans les fractionnements chromatographiques par tamisage moléculaire.

EXEMPLE 3

A 8 litres d'une solution comprenant 300 g/l de N-[tris(hydroxyméthyl)méthyl]acrylamide et 30 g/l de méthylène-bis-acrylamide dans de l'eau déminéralisée, on ajoute 1,6 l d'acide acétique glacial et 160 g de persulfate d'ammonium. Après dissolution de ce dernier, on ajoute 8 litres d'une solution préparée à partir de 2,7 l de glycérol, 2,7 l d'eau déminéralisée et 2,7 l de silicate de sodium à 35 % dans l'eau (40° Bé).

La solution organo-minérale ainsi obtenue est versée sous agitation dans 20 litres d'huile de paraffine et 10 ml d'agent émulsifiant connu sous la dénomination commerciale d'"Arlacel C".

La vitesse d'agitation est réglée de façon à obtenir une émulsion stable dont les gouttelettes ont un diamètre compris entre 5 $\mu$m et 500 $\mu$m.

Lorsque la suspension est homogène, on verse 2,3 l d'une solution comprenant 1,3 litre de TEMED, 256 ml d'"Arlacel C" et 3,2 l d'huile de paraffine. Une demi heure après ce premier ajout, on ajoute encore 2,3 l de cette même solution de TEMED. On observe à chacun de ces ajouts de TEMED une augmentation de température ; le milieu réactionnel passe ainsi de 25° C à 41° C.

Après retour à la température ambiante, on décante. La phase huileuse est éliminée par succion et les perles obtenues sont lavées à l'eau déminéralisée. La suspension de perles est ajustée à pH 6,5-7 par adjonction de soude normale puis laissée une nuit sous agitation.

Ces perles peuvent après dessication et réhydratation être utlisées dans les fractionnements chromatographiques par tamisage moléculaire.

EXEMPLE 4

A 200 ml d'une solution comprenant 150 mg/ml de N-[tris(hydroxyméthyl)méthyl]acrylamide et 30 mg/ml de méthylène-bis-acrylamide dans de l'eau déminéralisée, on ajoute 70 ml d'acide acétique glacial et 5 g de persulfate d'ammonium. Après dissolution de ce dernier, en ajoute 200 ml d'une solution de silicate de sodium à 17,5 % soit 20° Bé.

La solution organo-minérale ainsi obtenue est versée sous agitation dans 2 litres d'huile de paraffine et 1 ml d'agent émulsifiant connu sous la dénomination commerciale d'"Arlacel C".

La vitesse d'agitation est réglée de façon à obtenir une émulsion stable dont les gouttelettes ont un diamètre compris entre 5 $\mu$m et 500 $\mu$m.

Lorsque la suspension est homogène, on ajoute un mélange de 70 ml de TEMED, 120 ml d'huile de paraffine et 5 ml d'"Arlacel C".

Les perles sont récupérées de façon identique que dans les exemples précédents.

Ce produit est utilisable comme support chromatographique destiné à la gel-filtration.

EXEMPLE 5

A une solution obtenue par chauffage à 55° C de 30 g de N-[tris(hydroxyméthyl)méthyl]-acrylamide, 2 g de diméthylaminoéthylacrylamide et 6 g de méthylène-bis-acrylamide complétée à 80 ml avec de l'eau déminéralisée et revenue à température ambiante, on ajoute 34 ml d'acide acétique, 80 ml d'une solution de silicate de sodium à 17,5 % et 2 g de persulfate d'ammonium.

La solution organo-minérale ainsi obtenue est versée sous agitation dans 1 litre d'huile de paraffine et 3 ml d'agent émulsifiant connu sous la dénomination commerciale d'"Arlacel C".

La vitesse d'agitation est réglée de façon à obtenir une émulsion stable dont les gouttelettes ont un diamètre compris entre 5 $\mu$m et 500 $\mu$m.

Lorsque la suspension est homogène, on ajoute un mélange de 70 ml de TEMED et 70 ml d'huile de paraffine.

Les perles sont récupérées selon la méthode décrite dans les exemples 2 et 3.

Ce produit est utilisable pour la réalisation d'une chromatographie d'échange d'ions.

EXEMPLE 6

On opère comme dans l'exemple 2 mais en remplaçant le N-[tris(hydroxyméthyl)méthyl]-acrylamide par une quantité identique de N-[tris-(hydroxyméthyl)méthyl]méthacrylamide.

Les perles obtenues sont utilisables dans les fractionnements chromatographiques par tamisage moléculaire.

EXEMPLE 7

A 200 ml d'une solution comprenant 230 mg/ml d'acrylamide et 23 mg/ml de méthylène-bis-acrylamide dans de l'eau déminéralisée, on ajoute 25 ml d'acide acétique glacial puis 5 mg de persulfate d'ammonium.

A la solution ainsi obtenue, on ajoute 200 ml d'une solution aqueuse de silicate de sodium à 10 %.

La solution organo-minérale ainsi obtenue est versée sous agitation dans 2 litres d'huile de paraffine contenant 1 ml d'émulsifiant connu sous la dénomination commerciale d'"Arlacel C".

La vitesse d'agitation est réglée de façon à obtenir une émulsion stable dont les gouttelettes ont un diamètre compris entre 5 μm et 500 μm.

Lorsque la suspension est homogène, on ajoute un mélange de 25 ml de TEMED, 120 ml d'huile de paraffine et 5 ml d'"Arlacel C".

Les perles de polymères ainsi obtenues sont récupérées de façon identique à celle décrite dans les exemples précédents.

Ce produit est utilisable comme support chromatographique destiné à la gel-filtration.

EXEMPLE 8

A 200 ml d'une solution aqueuse comprenant 150 mg/ml de vinylpyrrolidone et 50 mg/ml de méthylène-bis-acrylamide, on ajoute 80 ml d'acide acétique glacial puis 5 mg de persulfate d'ammonium.

A la solution ainsi obtenue, on ajoute 200 ml d'une solution de silicate de sodium à 14 %.

La solution organo-minérale ainsi obtenue est versée dans 2 litres d'huile de paraffine contenant 1 ml d'émulsifiant connu sous la dénomination commerciale d'"Arlacel C".

La vitesse d'agitation est réglée de façon à obtenir une émulsion stable dont les gouttelettes ont un diamètre compris entre 5 μm et 500 μm.

Lorsque la suspension est homogène, on ajoute un mélange de 50 ml de TEMED, 120 ml d'huile de paraffine et 5 ml d'"Arlacel C".

Les perles ainsi obtenues sont récupérées de façon similaire à celle décrite dans les exemples précédents.

Ce produit est utilisable comme support chromatographique destiné à la gel-filtration.

EXEMPLE 9

Dans une colonne de verre de 1,6 cm de diamètre intérieur et de 50 cm de hauteur, on introduit 90 ml du gel obtenu selon l'exemple 3 dont les particules ont un diamètre compris entre 40 μm et 80 μm.

Une fois les perles de polymères tassées dans le tube chromatographique et lavées à l'aide d'une solution tampon tris(hydrométhyl)aminométhane / HCl 50 mM, NaCl 0,15 M, pH 7,4, on introduit en haut de la colonne l'échantillon contenant les substances à séparer.

Cet échantillon est constitué par 1 ml de la solution tampon précédente contenant 10 mg d'albumine bovine, 10 mg de z-lactoglobuline, 10 mg de myoglobine et 5 mg de cytochrome C. On élue avec la solution tampon précédente sous un débit de 6,6 ml/h. On sépare ainsi les 4 substances contenues dans l'échantillon.

**Revendications**
**Revendications pour les Etats contractants suivants : AT, BE, CH, DE, FR, GB, GR, IT, LI, LU, NL, SE**

1. Polymères composites homogènes contenant sous forme interpénétrée 20 % à 80 % en poids de silice et 80 % à 20 % en poids d'un copolymère acrylique, vinylique et/ou allylique réticulé tridimensionnel comprenant sous forme copolymérisée 98 % à 70 % en poids d'au moins un monomère acrylique, vinylique ou allylique monofonctionnel et 2 % à 30 % en poids d'un monomère réticulant acrylique ou allylique bifonctionnel.

2. Polymères selon la revendication 1 contenant 20 % à 50 % en poids de silice et 50 % à 80 % en poids du copolymère acrylique, vinylique et/ou allylique réticulé tridimensionnel.

3. Polymères selon l'une des revendications 1 et 2 pour lesquels le monomère acrylique, vinylique ou allylique monofonctionnel est l'acrylamide, le méthacrylamide, le N-[tris-(hydroxyméthyl)méthyl] acrylamide, le N-[tris-(hydroxyméthyl)méthyl] méthacrylamide, le méthylolacrylamide, l'acrylate de polyéthylèneglycol, le N-acryloyl ou N-méthacryloyl amino-2 hydroxyméthyl-2 propanediol-1,3, le morpholinoéthylacrylamide, le diéthylaminoéthylacrylamide, le diéthylaminoéthylméthacrylamide, le triéthylaminoéthylacrylamide, le triméthylaminopropylméthacrylamide, l'acide acrylique, l'acide méthacrylique, l'acide acrylamido-6 hexanoïque, l'acryloylglycine, l'acryloyl β-alanine, l'acide acrylamidométhylpropanesulfonique, l'acryloylphosphocholamine, l'acroléine, la vinylpyrrolidone ou l'allylamine.

4. Polymères selon l'une des revendications 1 à 3 pour lesquels le monomère réticulant est le N,N′-diallyltartradiamide, le N,N′-méthylène-bis-acrylamide, le N,N′-hexaméthylène-bis-acrylamide, le N,N′-méthylène-bis-hydroxyméthylacrylamide, le glyoxal-bis-acrylamide, l'éthylènediacrylate et le diacrylate de polyéthylèneglycol.

5. Procédé de préparation des polymères composites selon la revendication 1 caractérisé en ce que l'on polymérise simultanément ou séquentiellement en milieu aqueux à pH 4-5 éventuellement en présence d'un liquide organique non miscible et/ou d'un agent qui permet d'augmenter la viscosité du milieu, du silicate de sodium, un ou plusieurs monomères vinyliques, acryliques ou allyliques monofonctionnel et un monomère réticulant acrylique ou allylique bifonctionnel.

6. Application des polymères composites selon l'une des revendications 1 ou 2 dans les techniques de chromatographie liquide.

**Revendications pour l'Etat contractant suivant : ES**

1. Procédé de préparation de polymères composites homogènes contenant sous forme interpénétrée 20 % à 80 % en poids de silice et 80 % à 20 % en poids d'un copolymère acrylique, vinylique et/ou allylique réticulé tridimensionnel comprenant sous forme copolymérisée 98 % à 70 % en poids d'au moins un monomère acrylique, vinylique ou allylique monofonctionnel et 2 % à 30 % en poids d'un monomère réticulant acrylique ou allylique bifonctionnel caractérisé en ce que l'on polymérise, en bloc ou en émulsion, simultanément ou séquentiellement, une solution aqueuse à pH 4-5 contenant du silicate de sodium, au moins un monomère vinylique, acrylique ou allylique monofonctionnel et un monomère réticulant acrylique ou allylique bifonctionnel.

2. Procédé selon la revendication 1 caractérisé en ce que la solution aqueuse soumise à la polymérisation contient 20 g/l à 200 g/l de silicate de sodium, 20 g/l à 250 g/l des monomères acryliques, vinyliques et/ou allyliques, le rapport en poids du ou des monomères acryliques vinyliques ou allyliques / monomère réticulant étant compris entre 50 et 3.

3. Procédé selon l'une des revendications 1 et 2 pour la préparation des polymères composites homogènes contenant 20 % à 50 % en poids de silice et 50 % à 80 % en poids du copolymère acrylique, vinylique et/ou allylique réticulé tridimensionnel.

4. Procédé selon l'une des revendications 1 à 3 caractérisé en ce que le monomère acrylique, vinylique ou allylique monofonctionnel est l'acrylamide, le méthacrylamide, le N-[tris-(hydroxyméthyl)méthyl] acrylamide, le N-[tris-(hydroxyméthyl)méthyl] méthacrylamide, le méthylolacrylamide, l'acrylate de polyéthylèneglycol, le N-acryloyl ou N-méthacryloyl amino-2 hydroxyméthyl-2 propanediol-1,3, le morpholinoéthylacrylamide, le diéthylaminoéthylacrylamide, le diéthylaminoéthylméthacrylamide, le triéthylaminoéthylacrylamide, le triméthylaminopropylméthacrylamide, l'acide acrylique, l'acide méthacrylique, l'acide acrylamido-6 hexanoïque, l'acryloylglycine, l'acryloyl β-alanine, l'acide acrylamidométhylpropanesulfonique, l'acryloylphosphocholamine, l'acroléine, la vinylpyrrolidone ou l'allylamine.

5. Procédé selon l'une des revendications 1 à 4 caractérisé en ce que le monomère réticulant est le N,N'-diallyltartradiamide, le N,N'-méthylène-bis-acrylamide, le N,N'-hexaméthylène-bis-acrylamide, le N,N'-méthylène-bis-hydroxyméthylacrylamide, le glyoxal-bis-acrylamide, l'éthylènediacrylate et le diacrylate de polyéthylèneglycol.

**Claims**
**Claims for the following Contracting States : AT, BE, CH, DE, FR, GB, GR, IT, LI, LU, NL, SE**

1. Homogeneous composite polymers containing, in an interpenetrated form, 20% to 80% by weight of silica and 80% to 20% by weight of a three-dimensional crosslinked acrylic, vinyl and/or allyl copolymer comprising, in a copolymerised form, 98% to 70% by weight of at least one monofunctional acrylic, vinyl or allyl monomer and 2% to 30% by weight of a difunctional acrylic or allyl crosslinking monomer.

2. Polymers according to Claim 1, containing 20% to 50% by weight of silica and 50% to 80% by weight of the three-dimensional crosslinked acrylic, vinyl and/or allyl copolymer.

3. Polymers according to either of Claims 1 and 2, in the case of which the monofunctional acrylic, vinyl or allyl monomer is acrylamide, methacrylamide, N-[tris(hydroxymethyl)-methyl]acrylamide, N-[tris(hydroxymethyl)-methyl]methacrylamide, methylolacrylamide, polyethylene glycol acrylate, N-acryloyl- or N-methacryloyl-2-amino-2-hydroxymethyl-1,3-propanediol, morpholinoethylacrylamide, diethylaminoethylacrylamide, diethylaminoethylmethacrylamide, triethylaminoethylacrylamide, trimethylaminopropylmethacrylamide, acrylic acid, methacrylic acid, 6-acrylamidohexanoic acid, acryloylglycine, acryloyl-β-alanine, acrylamidomethylpropanesulphonicacid, acryloyl-phosphocholamine, acrolein, vinylpyrrolidone or allylamine.

4. Polymers according to one of Claims 1 to 3, in the case of which the crosslinking monomer is N,N'-diallyltartardiamide, N,N'-methylenebisacrylamide, N,N'-hexamethylenebisacrylamide, N,N'-methylenebishydroxymethylacrylamide, glyoxalbisacrylamide, ethylene diacrylate and polyethylene glycol diacrylate.

5. Process for preparing the composite polymers according to Claim 1, characterised in that sodium silicate, one or more monofunctional vinyl, acrylic or allyl monomers and a difunctional acrylic or allyl crosslinking monomer are polymerised simultaneously or sequentially in an agueous medium at pH 4-5 optionally in the presence of an immiscible organic liquid and/or of an agent which enables the viscosity of the medium to be increased.

6. Application of the composite polymers according to either of Claims 1 and 2 in liquid chromatography techniques.

**Claims for the following Contracting State : ES**

1. Process for preparing homogeneous composite polymers containing, in an interpenetrated form, 20% to 80% by weight of silica and 80% to 20% by weight of a three-dimensional cross-slinked acrylic, vinyl and/or allyl copolymer comprising, in a copolymerised form, 98% to 70% by weight of at least one monofunctional acrylic, vinyl or allyl monomer and 2% to 30% by weight of a difunctional acrylic or allyl crosslinking monomer, characterised in that an aqueous solution at pH 4-5 containing sodium silicate, at least one monofunctional vinyl, acrylic or allyl monomer and a difunctional acrylic or allyl crosslinking monomer are polymerised, in bulk or in emulsion, simultaneously or sequentially.

2. Process according to Claim 1, characterised in that the aqueous solution subjected to polymerisation contains 20 g/l to 200 g/l of sodium silicate, 20 g/l to 250 g/l of the acrylic, vinyl and/or allyl monomers, the weight ratio of the acrylic, vinyl or allyl monomer(s) to the crosslinking monomer being between 50 and 3.

3. Process according to either of Claims 1 and 2 for preparing the homogeneous composite polymers containing 20% to 50% by weight of silica and 50% to 80% by weight of the three-dimensional crosslinked acrylic, vinyl and/or allyl copolymer.

4. Process according to one of Claims 1 to 3, characterised in that the monofunctional acrylic, vinyl or allyl monomer is acrylamide, methacrylamide, N-[tris(hydroxymethyl)-methyl]acrylamide, N-[tris(hydroxymethyl)-

methyl]methacrylamide, methylolacrylamide, polyethylene glycol acrylate, N-acryloyl or N-methacryloyl-2-amino-2-hydroxymethyl-1,3-propanediol, morpholinoethylacrylamide, diethylaminoethylacrylamide, diethylaminoethylmethacrylamide, triethylaminoethylacrylamide, trimethylaminopropylmethacrylamide, acrylic acid, methacrylic acid, 6-acrylamidohexanoic acid, acryloylglycine, acryloyl-$\beta$-alanine, acrylamidomethylpropanesulphonicacid, acryloylphosphocholamine, acrolein, vinylpyrrolidone or allylamine.

5. Process according to one of Claims 1 to 4, characterised in that the crosslinking monomer is N,N'-diallyltartardiamide, N,N'-methylenebisacrylamide, N,N'-hexamethylenebisacrylamide, N,N'-methylenebishydroxymethylacrylamide, glyoxalbisacrylamide, ethylene diacrylate and polyethylene glycol diacrylate.

**Patentansprüche**
**Patentansprüche für folgende Vertragsstaaten : AT, BE, CH, DE, FR, GB, GR, IT, LI, LU, NL, SE**

1. Homogene Verbundpolymere, die in gegenseitiger Durchdringung 20 bis 80 Gew.-% Siliciumdioxid und 80 bis 20 Gew.-% eines dreidimensional vernetzten Acryl-, Vinyl- und/oder Allylcopolymers enthalten, das in copolymerisierter Form 98 bis 70 Gew.-% zumindest eines monofunktionellen Acryl-, Vinyl- oder Allylmonomers und 2 bis 30 Gew.-% eines vernetzenden bifunktionellen Acryl- oder Allylmonomers enthält.

2. Polymere nach Anspruch 1, enthaltend 20 bis 50 Gew.-% Siliciumdioxid und 50 bis 80 Gew.-% dreidimensional vernetztes Acryl-, Vinyl-und/oder Allylcopolymer

3. Polymere nach einem der Ansprüche 1 und 2, worin das monofunktionelle Acryl-, Vinyl- oder Allylmonomer Acrylamid, Methacrylamid, N-[Tris(hydroxymethyl)methyl)acrylamid, N-[Tris-(hydroxymethyl)methyl]methacrylamid, Methylolacrylamid, Polyäthylenglykolacrylat, N-Acryloyl- oder N-Methacryloyl-2-amino-2-hydroxymethyl-1,3-propandiol, Morpholinoäthylacrylamid, Diäthylaminoäthylacrylamid, Diäthylaminoäthylmethacrylamid, Triäthylaminoäthylacrylamid, Trimethylaminopropylmethacrylamid, Acrylsäure, Methacrylsäure, 6-Acrylamidohexansäure, Acryloylglycin, Acryloyl-$\beta$-alanin, Acrylamidomethylpropansulfonsäure, Acryloylphosphocholamin, Acrolein, Vinylpyrrolidon oder Allylamin ist.

4. Polymere nach einem der Ansprüche 1 bis 3, worin das vernetzende Monomer N,N'-Diallyltartradiamid, N,N'-Methylen-bis-acrylamid, N,N'-Hexamethylen-bis-acrylamid, N,N'-Methylen-bis-hydroxymethylacrylamid, Glyoxal-bis-acrylamid, Äthylendiacrylat und Polyäthylenglykoldiacrylat ist.

5. Verfahren zur Herstellung von Verbundpolymeren nach Anspruch 1, dadurch gekennzeichnet, daß man gleichzeitig oder sequentiell in wässerigem Milieu bei einem pH-Wert von 4 bis 5, gegebenenfalls in Gegenwart einer nicht mischbaren organischen Flüssigkeit und/oder eines Mittels, das es ermöglicht, die Viskosität des Milieus zu erhöhen, Natriumsilicat oder ein oder mehrere monofunktionelle Vinyl-, Acryl- oder Allylmonomere und ein vernetzendes bifunktionelles Acryl- oder Allylmonomer polymerisiert.

6. Verwendung der Verbundpolymeren nach einem der Ansprüchen 1 oder 2 bei den Techniken der Flüssigkeitschromatographie.

**Patentansprüche für folgenden Vertragsstaat : ES**

1. Verfahren zur Herstellung von homogenen Verbundpolymeren, die in gegenseitiger Durchdringung 20 bis 80 Gew.-% Siliciumdioxid und 80 bis 20 Gew.-% eines dreidimensional vernetzten Acryl-, Vinyl- und/oder Allylcopolymers enthalten, das in copolymerisierter Form 98 bis 70 Gew.-% zumindest eines monofunktionellen Acryl-, Vinyl- oder Allylmonomers und 2 bis 30 Gew.-% eines vernetzenden bifunktionellen Acryl- oder Allylmonomers enthält, dadurch gekennzeichnet, daß man in Masse oder in Emulsion gleichzeitig oder sequentiell eine wässerige Lösung mit einem pH-Wert von 4 - 5, enthaltend Natriumsilicat, zumindest ein monofunktionelles Vinyl-, Acryl- oder Allylmonomer und ein bifunktionelles vernetzendes Acryl- oder Allylmonomer polymerisiert.

2. Verfahren nach Anspruch 1, dadurch gekennzeichnet, daß die der Polymerisation unterworfene wässerige Lösung 20 g/l bis 200 g/l Natriumsilicat, 20 g/l bis 250 g/l Acryl-, Vinyl- und/oder Allylmonomere enthält, wobei das Gewichtsverhältnis des oder der Acryl-, Vinyl- oder Allylmonomeren/vernetzendem Monomer zwischen 50 und 3 liegt.

3. Verfahren nach einem der Ansprüche 1 und 2 zur Herstellung von homogenen Verbundpolymeren, die 20 bis 50 Gew.-% Siliciumdioxid und 50 bis 80 Gew.-% dreidimensional vernetztes Acryl-, Vinyl- und/oder Allylcopolymer enthalten.

4. Verfahren nach einem der Ansprüche 1 bis 3, dadurch gekennzeichnet, daß das monofunktionelle Acryl-, Vinyl- oder Allylmonomer Acrylamid, Methacrylamid, N-[Tris(hydroxymethyl)-methyl]acrylamid, N-[Tris(hydroxymethyl)-methyl]methacrylamid, Methylolacrylamid, Polyäthylenglykolacrylat, N-Acryloyl- oder N-Methacryloyl-2-amino-2-hydroxymethyl-1,3-propandiol, Morpholinoäthylacrylamid, Diäthylaminoäthylacrylamid, Diäthylaminoäthylmethacrylamid, Triäthylaminoäthylacrylamid, Trimethylaminopropylmethacrylamid, Acrylsäure, Methacrylsäure, 6-Acrylamidohexansäure, Acryloylglycin, Acryloyl-$\beta$-alanin, Acrylamidomethylpropansulfonsäure, Acryloylphosphocholamin, Acrolein, Vinylpyrrolidon oder Allylamin ist.

5. Verfahren nach einem der Ansprüche 1 bis 4, dadurch gekennzeichnet, daß das vernetzende Monomer N,N'-Diallyltartradiamid, N,N'-Methylen-bis-acrylamid, N,N'-Hexamethylen-bis-acrylamid, N,N'-Methylen-bis-hydroxmethylacrylamid, Glyoxalbis-acrylamid, Äthylendiacrylat und Polyäthylenglykoldiacrylat ist.